# EUROPEAN PATENT APPLICATION

(11) **EP 4 279 639 A1**
(43) Date of publication of application: **22.11.2023**
(21) Application number: 23174028.3
(22) Date of filing: 17.05.2023
(51) Int. Cl.: C25B 15/021, E02B 17/00, E21B 41/00, F03D 9/19, F03D 13/10, F03D 13/25, F03D 80/60, F24T 10/10

(54) **A HEAT-EXCHANGER**

(30) Priority: 18.05.2022 GB 202207254
(71) Applicant: Aquaterra Energy Limited, Norwich, Norfolk NR6 6BF (GB)
(72) Inventor: MORRISON, George Graham, Norwich, NR6 6BF (GB)
(74) Representative: Harrison, Paul Richard

(57) **Abstract**

A heat-exchanger to remove heat energy from an electrolysis plant housed on a seabed-supported rig, the rig having one or more legs whose lower end optionally rests on the seabed, the electrolysis plant including a cooling pipe through which heat-exchange fluid flows to remove heat energy from the electrolysis plant,
a pump to pump the heat-exchange fluid through the cooling pipe,
a portion of the cooling pipe extending below sea level, and supported on a leg,
the leg housing a heat-exchange unit in thermal contact with the cooling pipe to transfer heat energy therefrom and transfer the heat-energy to the sea water.

## Description

### Field of the Invention

The present invention relates to a heat-exchanger, and especially a heat-exchanger which acts to remove excess heat energy from an apparatus. The heat-exchanger is particularly suitable for use in connection with process temperature control during the manufacture of hydrogen, and especially suitable when incorporated into an offshore structure such as an oil and gas drilling platform, offshore hydrogen factory or the like.

### Background to the Invention

There is a need within the renewable energy generating sector, and in particular the wind generated sector to convert electricity produced into hydrogen, often referred to as green hydrogen. The ability to carry out this procedure is of advantage generally but especially useful when dealing with periods of overproduction of electricity. in the UK, much of the wind-generated electricity is generated offshore, and it would therefore be particularly advantageous to have a means of generating hydrogen fuel close to the wind turbines themselves. This would have the added advantage that the supply of water to be split electrolytically would be readily to hand. The hydrogen produced can be utilised as an energy vector for domestic and industrial use.

The present invention, in its primary embodiment disclosed herein seeks to provide a marine-based sea-borne unit which can be moved to the required location in close proximity to a wind-turbine farm. It will be understood that the invention can include the heat exchange system being incorporated into a mobile ex-drilling rig, a new hydrogen platform (fixed or mobile) or incorporated on an oil or gas floating production facility where large amounts of heat need to be disposed of. The unit herein described including an electrolysis plant to generate hydrogen from water using the electricity from the wind turbines, and means either to store the hydrogen generated or to pipe the hydrogen to an onshore storage facility. In particular, cooling means are provided to maintain the electrochemical processes within the electrolysis unit at the appropriate temperature.

The solution of the present invention, in its primary embodiment, seeks to address the above problem in that a further problem associated with the current offshore energy generation is also addressed. In many areas of the world, and especially in the North Sea region of the UK, extraction of oil and gas from deposits is coming to the end of its commercial viability. One option is to employ the equipment and facilities required by the former rig for the extraction process.

It is an object of the present invention to provide a thermal energy disposal system to address the above problems.

### Summary of the Invention

According to a first aspect of the invention there is provided a heat-exchanger to remove heat energy from an electrolysis plant housed on a seabed-supported rig, the rig having one or more legs whose lower end extends below sea level, the electrolysis plant including a cooling pipe through which heat-exchange fluid flows to remove heat energy from the electrolysis plant,
a pump to pump the heat-exchange fluid through the cooling pipe,
a portion of the cooling pipe extending below sea level, and supported on a leg,
the leg housing a heat-exchange unit located below the mean sea level in thermal contact with the cooling pipe and sea water to transfer heat energy therefrom and transfer the heat-energy to the sea water.

The heat is therefore removed from the electrolysis plant using a heat exchanger having few moving parts and which should require little maintenance. The system provides a hydrostatically balanced, closed loop arrangement.

The heat-exchange fluid is preferably selected from water or a glycol/water mixture, and particularly preferably water. The heat-exchange fluid is further preferably at a temperature of from 70°C - 80°C within the electrolysis plant.

The heat-exchange unit is preferably housed sufficiently below sea level such that it is unaffected by wave motion of the sea.

The heat-exchange fluid preferably flows though fluid channels within the heat-exchange unit.

Alternatively, heat is transferred from the heat-exchange fluid to the heat-exchange unit by conduction. Means are optionally provided to actively transfer heat energy from the fluid to the heat-exchange unit.

Preferably, two or more heat-exchange units are housed, optionally preferably in parallel configuration, on a leg, each being in thermal contact with the heat-exchange fluid. Conveniently, means is provided to allow flow to be switched between the two or more heat-exchange units, allowing maintenance to be carried out on a unit without interruption to the operation of the electrolysis plant.

Preferably, one or more sensors are provided on the leg to allow the temperature and the flow of the sea-water to be monitored. Further preferably, the or each sensor is linked to a processor controlling the electrolysis plant should the data from a sensor move outside predetermined values.

### Brief Description of the Drawings

The invention is now described with reference to the accompanying drawings which show, by way of example only, two embodiments of an energy storage system. In the drawings,
Figure 1 is prior art cooling system located on a platform deck or rig;
Figure 2 is a system diagram illustrating the process flow of the system of Figure 1;
Figure 3 illustrates a cooling system in accordance with the invention, located on a jack-up drilling rig; and
Figure 4 is a system diagram illustrating the process flow of the system of Figure 3.

### Detailed Description of the Invention

As described above, the problem exists in the electrolysis of water used to produce hydrogen, in that the process firstly consumes a significant amount of electrical energy, and also produces heat energy in the electrolysis unit which needs to be cooled during the electrolysis operation. Thus, any heat removed from the electrolysis cells needs to be dissipated to the environment (sea or air). The invention is a novel method to interface the heat to be dispersed and into the environment. The present invention provides a cooling system which is housed on a marine based supporting platform. The supporting platform can optionally be a platform which has as its basic structure a decommissioned oil rig platform. This allows both the extended usage of the rig, along with providing a structure that is suitable for use in an offshore environment. Moreover, the supporting platform, being mobile, can be brought to an advantageous location using well-established procedures and equipment.

The embodiments as herein described accept electricity from one or more turbines and utilise this to convert water into hydrogen by electrolytically splitting water. The hydrogen produced can be pumped, for example at a pressure of 40 bar, on-shore for use as a combustible energy vector. The electrolytic splitting of water is a fast-evolving area of technology which is becoming increasingly efficient as new methods and catalysts are developed. The current electrolytic processes are only typically 30% inefficient (i.e. 70% efficient), and as a side-product of the process, thermal energy is generated. This is a significant amount of heat which needs to be removed from the electrolytic process and dissipated.

The present invention provides for the utilisation of sea-water to achieve this aim. The sea water is utilised as a heat dissipation medium and acts as the heat sink.

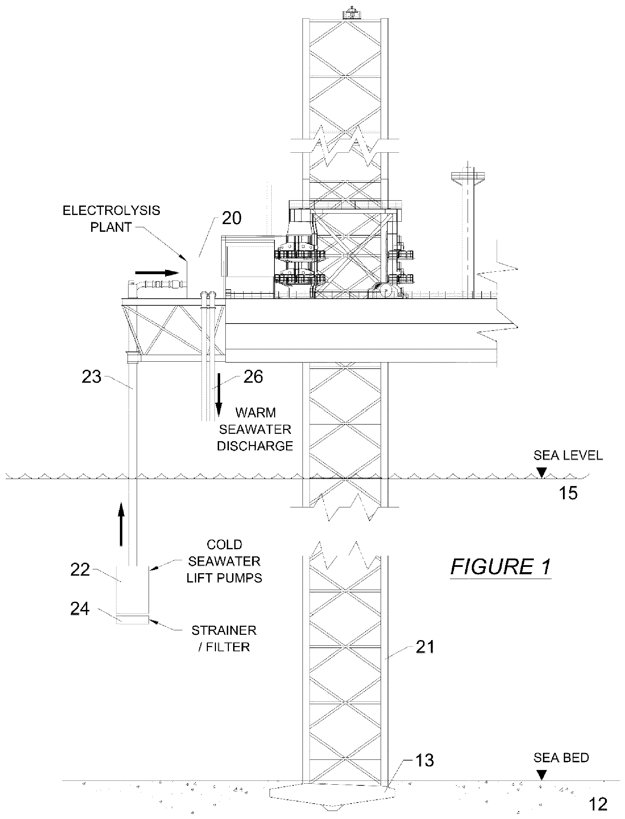

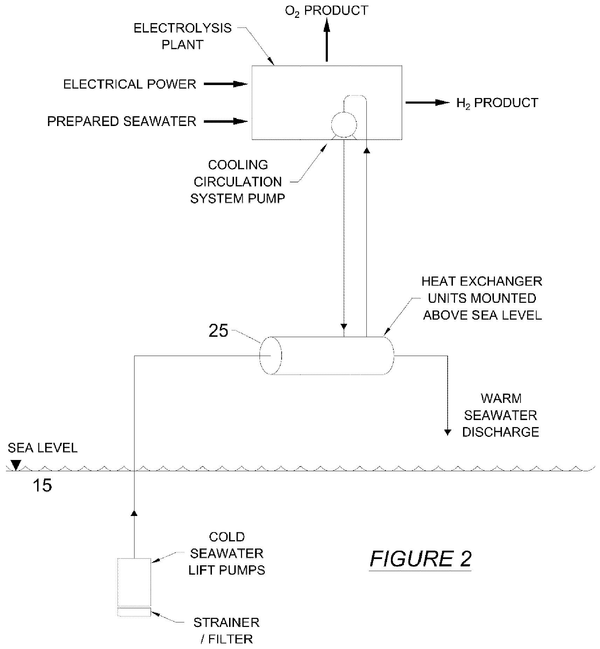

Referring initially to Figures 1 and 2, and especially Figure 1 these illustrate a prior art system, referred to herein as an indirect cooling system. An electrolysis plant is housed on a platform 20 held in position in relation to the seabed 12 by a leg 21 secured to the seabed 12. It will be recognised that in other embodiments, the leg extends below the sea level but does not rest on the seabed.

In this embodiment of Figure 1, a high flow capacity subsea pump 22 is fluidly connected via an indirect cooling inlet pipe 23 to lift sea water to the platform 20. The pump 22 draws in sea water through a strainer or filter 24 and then pumps the sea water to primary heat exchangers 25 (see Figure 2). In the primary heat-exchangers 25, heat is transferred from a cooling system that in use removes the heat generated from the electrolysis plant, to the raised sea water. The heated sea water is then discharged via one or more discharge pipes 26 into the sea.

The above system has several disadvantages. Firstly, a significant volume of sea water is required (around 20,000 Tonnes/hour) to be lifted. This is not only a significant volume of sea water to lift from the sea, but also requires energy and filtration equipment, to remove seaborne solids, present. Secondly, the mass of the equipment required is also large, which could instead be utilised to increase the hydrogen generating capacity. The space required by the pumping equipment could also be better utilised. Thirdly, the sea water used in the cooling is returned to the sea surface warm, which is potentially environmentally damaging due to the presence of flora and fauna. Moreover, the discharge of high volumes of water can cause scouring of the sea bed, especially in shallow water.

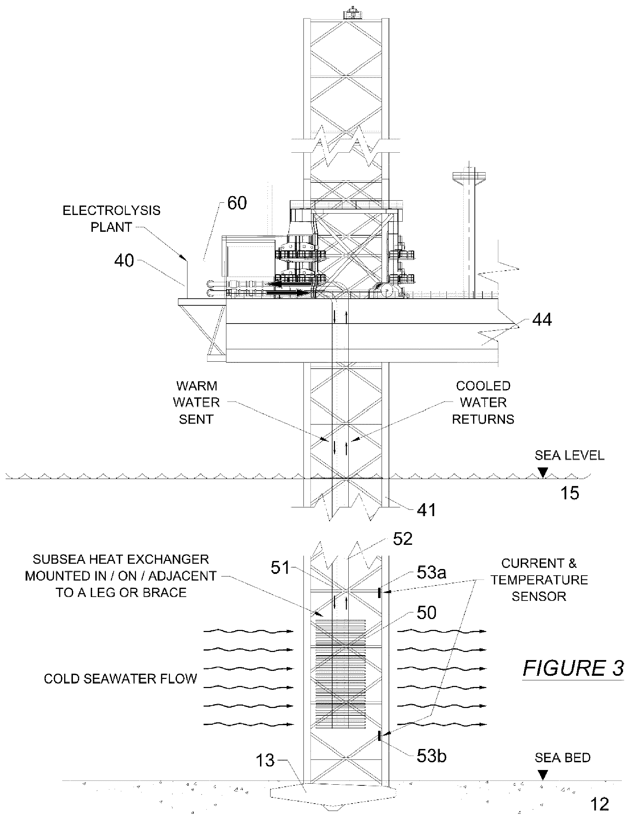

Referring now to Figure 3, this shows a structure to house the apparatus for the electrolysis and also to support a sea water-based heat-exchange system. In Figure 3, a converted drilling platform, generally referenced 40 is shown. It will be readily understood that instead of a converted drilling platform, a new fixed or floating hydrogen production facility, for example, can be used. The platform 40 comprises a leg 41 which rests on the seabed 12, via a spud pan 13 to prevent the rig from penetrating the seabed 12. The natural flow of sea water (from tide and current) past the leg 41 is shown from left to right in the illustration. Partway up the leg 41 is a deck 44 which is located above the sea level 15 to ensure that machinery thereon is not subject to impact by the sea. The deck 44 houses the electrolysis apparatus and other infrastructure (not shown) required to carry out the electrolysis of water.

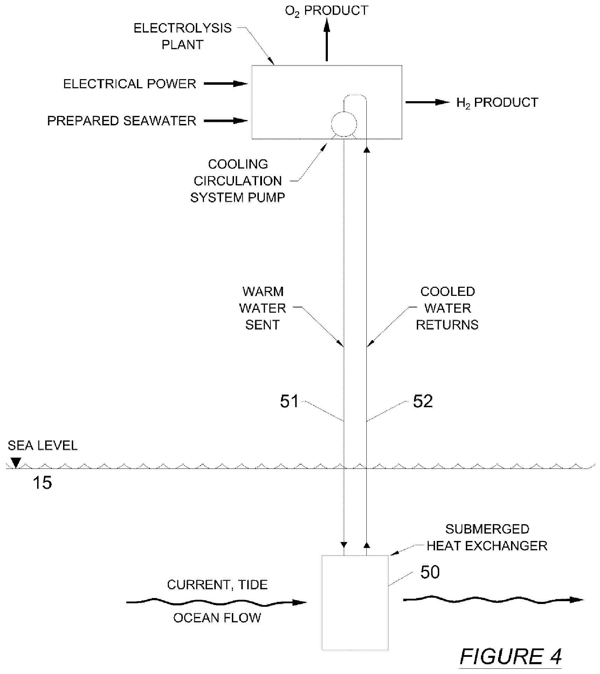

In order to remove the heat generated in the electrolytic process and to ensure that the electrolysis plant does not overheat, an electrolysis cell cooling system is included. The embodiment of heat-exchanger cooling system illustrated in Figure 3 is referred to herein as a direct cooling system as the cooling is linked directly to the subsea heat-exchange unit 50. The cooling system acts to bring a cooling fluid utilised in cooling the electrolysis plant into direct thermal contact with the sea water surrounding the rig (see Figure 4), thus utilising the sea water directly as a heat sink.

In more detail, one or more pumps are housed on the deck 44. The pumps act to pump a heat-exchange fluid which is preferably water but can be a water/glycol mix [e.g. min 20% glycol by volume], and which can be at a temperature of 70 - 80°C for example, through a pipe system in thermal contact with the electrolysis cells on the deck 44 and a heat-exchange unit located below the sea level. Fluid which has been in thermal contact with the electrolysis plant 60 and hence has been heated is pumped in a downward direction along a pipe 51, which has for example a diameter of 10 - 12" (25.4 - 30.5cm) housed within the leg 41. Towards the base of the leg 41 the pipe 51 is fluidly connected to the subsea heat-exchange unit 50 enabling the fluid to flow through the subsea heat-exchange unit 50 and exchange thermal energy therewith.

The subsea heat-exchange unit 50 is located below the mean sea level and preferably located sufficiently below mean sea level to ensure that the subsea heat-exchange unit 50 is not affected by motion of the waves [e.g. a water depth of at least 15 meters], thus minimising the strain on the subsea heat-exchange unit 50. The subsea heat-exchange unit 50 has a large surface area in contact with the sea water. As the sea water naturally flows past the subsea heat-exchange unit 50 therefore heat is rapidly transferred therefrom to the sea water. Once the fluid within the pipe 51 has been cooled, the fluid then flows upward under the action of a pump, through the pipe 52 and back to the electrolysis plant 60 to complete the fluid cycle, the fluid then being heated again by the heat removed from the electrolysis plant 60. The cooling fluid is therefore moved around a closed loop with the electrolysis unit thereby being directly thermally linked with the sea water. Most typically, the flow is under the action of a conventional pump. Unlike prior art systems, there is no requirement to lift large quantities of sea water and subsequently discharge said sea water back into the sea. This saves energy and also reduces associated issues when pumping sea water such as corrosion, dealing with impurities, solid and solvated contaminants, marine life etc.

The hydrostatic balance within the direct cooling system lowers the energy required to run the system.

In an alternative embodiment, not illustrated, the pipe 51 is in thermal contact only with the heat-exchange unit 50. This embodiment transfers heat between the pipe 51 and the heat-exchanger unit less rapidly than in the illustrated embodiment but is more likely to have lower running costs. This embodiment relies on the temperature difference between the fluid in the pipe 51 and that of the subsea heat-exchange unit 50 to transfer heat energy from the fluid to the subsea heat-exchange unit 50. From the subsea heat-exchange unit 50, the heat energy is transferred to the sea water with which it is in contact. The transfer reduces the temperature differential between the fluid in the pipe 51 and the subsea heat-exchange unit 50 so increasing the rate of heat transfer therebetween.

In an optional embodiment, in order to calculate the fluid volume flow required within the pipe 51 and also to ensure that the temperature of the sea water in the region of the subsea heat-exchange unit 50 does not rise too high, for example where current flow is low, a set of, preferably, two sea water current flow and temperature sensors 53a, 53b is provided, secured to the leg 41. Alternatively or additionally, a sensor can be provided adjacent the heat-exchanger. The temperature sensors 53a, 53b are linked to a processor of a process control system which can act to control the rate at which the electrolysis plant 60 functions in the event that the temperature of the sea rises to an unacceptable level. In an embodiment, not illustrated, more than two sensors are utilised. In a further embodiment, also not illustrated, further sensors are provided, optionally secured to a leg of the platform, which sensors measure properties such as marine currents and tidal flow around the heat-exchanger, the data being transferred to the processor of the process control system.

In an alternative embodiment, not illustrated, the system has two or more in parallel subsea heat-exchanger units, linked with fluid pipes to take flow of heated heat-exchange fluid and return the cooled fluid to the electrolysis plant. This allows firstly for maintenance of one set of fluid pipes and subsea heat-exchanger unit without the electrolysis plant having to cease functioning. Secondly, should the sea temperature around one subsea heat-exchanger unit become unacceptably high, flow can be switched to the other subsea heat-exchanger unit: again, allowing the electrolysis plant to continue to function.

Utilising the present invention provides several advantages. Firstly, the heat removed from the electrolysis plant is absorbed at depth, where there is little flora or fauna. Moreover, the system can run at a higher temperature differential than the prior art system. Secondly, there is no risk of scour from large volumes of water being pumped into the sea or from already heated water being sucked back into the cooling system. Control is easier in the present invention due to the closed loop system disclosed and the closed loop also means a heat-exchange medium other than water can be used. A single cooling system also decreases the complexity bringing concomitant costs, maintenance and control savings.

## Claims

1. A heat-exchanger suitable for removing heat energy from an electrolysis plant (60) housed on a marine-supported platform, the platform having one or more legs (41) whose lower end extends below sea level, the electrolysis plant (60) including a cooling pipe (51) through which heat-exchange fluid flows to remove heat energy from the electrolysis plant,
a pump to pump the heat-exchange fluid through the cooling pipe(51),
a portion of the cooling pipe (51) extending below sea level, and supported on a leg,
the leg housing a heat-exchange unit (50), below the mean sea level in thermal contact with the cooling pipe and sea water to transfer heat energy from the cooling pipe and transfer the heat-energy to the sea water.

2. A heat-exchanger according to Claim 1, wherein the heat-exchange fluid is selected from water or a glycol/water mixture.

3. A heat-exchanger according to Claim 2, wherein the heat-exchange fluid is water.

4. A heat-exchanger according to any preceding Claim, wherein the heat-exchange fluid is at a temperature of from 70°C - 80°C within the electrolysis plant.

5. A heat-exchanger according to any preceding Claim, wherein the heat-exchange unit is housed sufficiently below sea level such that it is unaffected by wave motion of the sea.

6. A heat-exchanger according to any preceding Claim, wherein the heat-exchange fluid flows though fluid channels within the heat-exchange unit.

7. A heat-exchanger according to Claims 1 - 5, wherein heat is transferred from the heat-exchange fluid to the heat-exchange unit by conduction.

8. A heat-exchanger according to Claim 7, wherein means are provided to actively transfer heat energy from the fluid to the heat-exchange unit.

9. A heat-exchanger according to any preceding Claim, wherein two or more heat-exchange units are housed on a leg, each being in thermal contact with the heat-exchange fluid.

10. A heat-exchanger according to Claim 9, wherein the two or more heat-exchange units are in parallel configuration.

11. A heat-exchanger according to Claims 9 and 10, wherein means is provided to allow flow to be switched between the two or more heat-exchange units.

12. A heat-exchanger according to any preceding Claim, wherein one or more sensors (53a - 53b) are provided on the leg.

13. A heat-exchanger according to Claims 1 -11, wherein one or more sensors (53a - 53b) are provided adjacent the heat-exchanger.

14. A heat-exchanger according to Claim 12 or Claim 13, wherein the or each sensor is linked to a processor controlling the electrolysis plant should the data from a sensor move outside predetermined values.
